# EUROPEAN PATENT APPLICATION

(11) **EP 4 773 493 A1**
(43) Date of publication of application: **08.07.2026**
(21) Application number: 24869966.2
(22) Date of filing: 08.07.2024
(51) Int. Cl.: H02M 1/12

(54) **FILTER CIRCUIT, HOUSEHOLD APPLIANCE, CONTROL METHOD, AND COMPUTER-READABLE STORAGE MEDIUM**

(30) Priority: 28.09.2023 CN 202311284433
(71) Applicant: Foshan Shunde Midea Washing Appliances Manufacturing Co., Ltd., Foshan, Guangdong 528311 (CN)
(72) Inventor: ZHONG, Yaoping, Foshan, Guangdong 528311 (CN); YANG, Bin, Foshan, Guangdong 528311 (CN); HUANG, Tianqi, Foshan, Guangdong 528311 (CN)
(74) Representative: Treeby, Philip David William
(86) International application number: PCT/CN2024/104308
(87) International publication number: WO 2025/066410

(57) **Abstract**

A filter circuit (10), a household appliance (40), a control method, and a computer-readable storage medium. The filter circuit (10) is used for a motor (20). The filter circuit (10) comprises a first resistor (11) and a first capacitor (14). The filter circuit (10) is configured in such a manner that a circuit is formed by a first live wire end (12), the first resistor (11), and the first capacitor (14), and a neutral wire end (15) to charge the first capacitor (14), and when the first capacitor (14) meets a preset charging condition, a power supply circuit is formed by a second live wire end (13), the motor (20), and the neutral wire end (15), so as to power the motor (20) by means of output ends (18).

## Description

### CROSS-REFERENCE TO RELATED APPLICATION

This application claims priority to and the benefit of Chinese patent application No. 202311284433.X, filed with China National Intellectual Property Administration on September 28, 2023, the entire contents of which are incorporated herein by reference.

### FIELD

The invention relates to the field of household appliance technologies, and more particularly, to a filter circuit, a household appliance, a control method, and a computer-readable storage medium.

### BACKGROUND

A starting method of a synchronous motor is generally direct starting, which causes the motor to be subjected to relatively large voltage interference during startup. Adding a corresponding filter component can achieve a filtering effect on the subjected voltage interference. However, the filter component may be damaged due to an excessive starting current generated during startup. If a corresponding current-limiting component is added to reduce the starting current, the filtering effect of the filter component on the subjected voltage interference may be in turn affected.

### SUMMARY

Embodiments of the invention provide a filter circuit, a household appliance, a control method, and a computer-readable storage medium to solve at least one of the above-mentioned technical problems.

An embodiment of the invention provides a filter circuit for a motor. The filter circuit includes: a first resistor having an end connected to a first live wire terminal and the other end connected to a second live wire terminal; and a first capacitor connected in series to the first resistor, the first capacitor having an end connected to the second live wire terminal and the other end connected to a neutral wire terminal. Two ends of the first capacitor each for, an output terminal configured to be connected to the motor. The filter circuit is configured to: form a charging loop via the first live wire terminal, the first resistor, the first capacitor, and the neutral wire terminal to charge the first capacitor; and form, in response to the first capacitor meeting a predetermined charging condition, a power supply loop via the second live wire terminal, the motor, and the neutral wire terminal to supply power to the motor via the output terminal.

For the above-mentioned filter circuit, before starting the motor, by forming the charging loop to charge the first capacitor, the first resistor connected in series to the first capacitor can reduce a magnitude of a current for charging the first capacitor. After a certain amount of charge is already stored in the first capacitor, the power supply loop is formed to supply power to the motor. In this case, the current for charging the first capacitor is small, which may not damage the first capacitor. Moreover, the first resistor is not connected to the power supply loop, and thus the filtering effect of the first capacitor may not be affected.

In some embodiments, the predetermined charging condition includes: a duration of charging the first capacitor reaches a first predetermined duration. In this way, controllability can be improved.

In some embodiments, the filter circuit is connected to an end of a predetermined power supply via the first live wire terminal and the second live wire terminal, and is connected to the other end of the predetermined power supply via the neutral wire terminal. In this way, circuit safety can be improved.

In some embodiments, the filter circuit further includes: a first switch connected to the first live wire terminal and configured to turn on or off a path between the first live wire terminal and a first predetermined power supply; and a second switch connected to the second live wire terminal and configured to turn on or off a path between the second live wire terminal and a second predetermined power supply. The filter circuit is configured to: form the charging loop by turning on the first switch; and form, in response to the first capacitor meeting the predetermined charging condition, the power supply loop by turning on the second switch. In this way, a starting speed of the motor can be ensured

In some embodiments, in response to the first capacitor meeting the predetermined charging condition, the first switch is configured to be turned off within a second predetermined duration after the second switch is turned on. In this way, an impact of the first resistor on the filtering effect of the first capacitor can be reduced.

An embodiment of the invention provides a household appliance. The household appliance includes: a motor; and the filter circuit according to any one of the above embodiments.

For the above-mentioned household appliance, before starting the motor, by forming the charging loop to charge the first capacitor, the first resistor connected in series to the first capacitor can reduce the magnitude of the current for charging the first capacitor. After the certain amount of charge is already stored in the first capacitor, the power supply loop is formed to supply power to the motor. In this case, the current for charging the first capacitor is small, which may not damage the first capacitor. Moreover, the first resistor is not connected to the power supply loop, and thus the filtering effect of the first capacitor may not be affected.

An embodiment of the invention provides a control method for the household appliance. The household appliance includes a filter circuit and a motor. The filter circuit includes: a first resistor having an end connected to a first live wire terminal, and the other end connected to a second live wire terminal; and a first capacitor connected in series to the first resistor, the first capacitor having an end connected to the second live wire terminal and the other end connected to a neutral wire terminal. Two ends of the first capacitor each form an output terminal configured to be connected to the motor. The control method includes: connecting the first live wire terminal and the neutral wire terminal to charge the first capacitor; and connecting, in response to determining that the first capacitor meets a predetermined charging condition, the second live wire terminal and the neutral wire terminal to supply power to the motor via the output terminal.

In the control method, before starting the motor, by forming the charging loop to charge the first capacitor, the first resistor connected in series to the first capacitor can reduce the magnitude of the current for charging the first capacitor. After the certain amount of charge is already stored in the first capacitor, the power supply loop is formed to supply power to the motor. In this case, the current for charging the first capacitor is small, which may not damage the first capacitor. Moreover, the first resistor is not connected to the power supply loop, and thus the filtering effect of the first capacitor may not be affected.

In some embodiments, the control method further includes: controlling, in response to determining that the first live wire terminal is connected, the motor to remain in an off state; and controlling, in response to determining that the second live wire terminal is connected, the motor to enter an on state. In this way, determination of a starting timing of the motor can be facilitated.

In some embodiments, the control method further includes: in response to the first capacitor meeting the predetermined charging condition, disconnecting connection with the first live wire terminal within a second predetermined duration after the second live wire terminal is connected. In this way, the impact of the first resistor on the filtering effect of the first capacitor can be reduced.

An embodiment of the invention provides a household appliance. The household appliance includes: a memory having a computer program stored therein; and a processor. The processor is configured to, when executing the computer program, implement the steps of the control method according to any one of the above embodiments.

For the above-mentioned household appliance, before starting the motor, by forming the charging loop to charge the first capacitor, the first resistor connected in series to the first capacitor can reduce the magnitude of the current for charging the first capacitor. After the certain amount of charge is already stored in the first capacitor, the power supply loop is formed to supply power to the motor. In this case, the current for charging the first capacitor is small, which may not damage the first capacitor. Moreover, the first resistor is not connected to the power supply loop, and thus the filtering effect of the first capacitor may not be affected.

An embodiment of the invention provides a computer-readable storage medium. The computer-readable storage medium has a computer program stored thereon. The computer program is configured to, when executed by a processor, implement the steps of the control method according to any one of the above embodiments.

For the above-mentioned household appliance, before starting the motor, by forming the charging loop to charge the first capacitor, the first resistor connected in series to the first capacitor can reduce the magnitude of the current for charging the first capacitor. After the certain amount of charge is already stored in the first capacitor, the power supply loop is formed to supply power to the motor. In this case, the current for charging the first capacitor is small, which may not damage the first capacitor. Moreover, the first resistor is not connected to the power supply loop, and thus the filtering effect of the first capacitor may not be affected.

Additional aspects and advantages of the invention will be provided at least in part in the following description, or will become apparent at least in part from the following description, or can be learned from practicing of the invention.

### BRIEF DESCRIPTION OF THE DRAWINGS

The above and/or additional aspects and advantages of the invention will become more apparent and more understandable from the following description of embodiments taken in conjunction with the accompanying drawings.
FIG. 1 is a schematic diagram of a partial circuit structure of a household appliance according to an embodiment of the invention.
FIG. 2 is a schematic diagram of another partial circuit structure of a household appliance according to an embodiment of the invention.
FIG. 3 is a flowchart of a control method according to an embodiment of the invention.
FIG. 4 is a block diagram of a household appliance according to an embodiment of the invention.
FIG. 5 is another flow chart of a control method according to an embodiment of the invention.

Reference Numerals:
filter circuit-10; first resistor-11; first live wire terminal-12; second live wire terminal-13; first capacitor-14; neutral wire terminal-15; first switch-16; second switch-17; output terminal-18;
motor-20;
predetermined power supply-30; first predetermined power supply-31; second predetermined power supply-32;
household appliance-40; control module-41.

### DETAILED DESCRIPTION OF THE EMBODIMENTS

Embodiments of the invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are intended to explain, rather than limiting, embodiments of the invention.

Various embodiments or examples for implementing different structures of the embodiments of the invention are provided below. In order to simplify the description of the embodiments of the invention, components and arrangements of specific examples are described herein. Of course, these specific examples are merely for the purpose of illustration, rather than limiting the invention. Further, the same reference numerals and/or reference letters may appear in different examples of the embodiments of the invention for the purpose of simplicity and clarity, instead of indicating a relationship between different embodiments and/or the discussed arrangements. In addition, the embodiments of the invention provide examples of various specific processes and materials. However, applications of other processes and/or the use of other materials are conceivable for those of ordinary skill in the art.

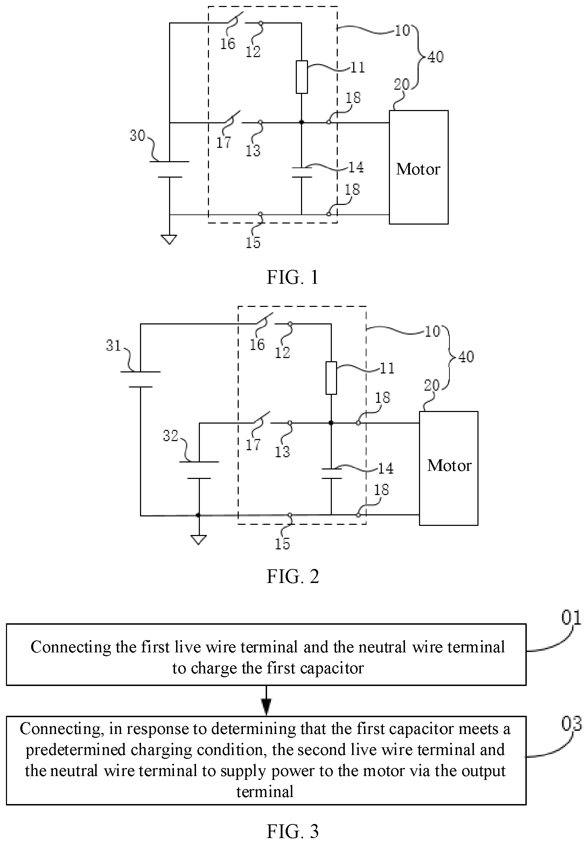

As illustrated in FIG. 1, an embodiment of the invention provides a filter circuit 10 for a motor 20. The filter circuit 10 includes: a first resistor 11 having an end connected to a first live wire terminal 12 and the other end connected to a second live wire terminal 13; and a first capacitor 14 connected in series to the first resistor 11. The first capacitor 14 has an end connected to the second live wire terminal 13 and the other end connected to a neutral wire terminal 15. Two ends of the first capacitor 14 each form an output terminal 18 configured to be connected to the motor 20.

The filter circuit 10 is configured to: form a charging loop via the first live wire terminal 12, the first resistor 11, the first capacitor 14, and the neutral wire terminal 15 to charge the first capacitor 14; and form, in response to the first capacitor 14 meeting a predetermined charging condition, a power supply loop via the second live wire terminal 13, the motor 20, and the neutral wire terminal 15 to supply power to the motor 20 via the output terminal 18.

For the above-mentioned filter circuit 10, before starting the motor 20, by forming the charging loop to charge the first capacitor 14, the first resistor 11 connected in series to the first capacitor 14 can reduce a magnitude of a current for charging the first capacitor 14. After a certain amount of charge is already stored in the first capacitor 14, the power supply loop is formed to supply power to the motor 20. In this case, the current for charging the first capacitor 14 is small, which may not damage the first capacitor 14. Moreover, the first resistor 11 is not connected to the power supply loop, and thus a filtering effect of the first capacitor 14 may not be affected.

Specifically, in the embodiment shown in FIG. 1, before the motor 20 needs to be started, the first live wire terminal 12 may be connected to a positive pole of an external power supply, and the neutral wire terminal 15 may be connected to a negative pole of the external power supply. In this way, the external power supply connects the first resistor 11 and the first capacitor 14 in series via the first live wire terminal 12 and the neutral wire terminal 15, forming a charging loop for the first capacitor 14. When the first capacitor 14 is connected to the charging loop, the first capacitor 14 may be charged by a charge provided by the external power supply, enabling a corresponding amount of charge to be stored in the first capacitor 14. When charging the first capacitor 14, a charging current for the first capacitor 14 may be generated in the power supply loop. Since the first resistor 11 is also connected in series in the charging loop, the first resistor 11 may exert a current-limiting effect in the charging loop, which can reduce the charging current in the charging loop, providing protection for the first capacitor 14. In this way, damage to the first capacitor 14 can be avoided due to an excessive charging current.

In response to the first capacitor 14 meeting the predetermined charging condition, that the corresponding amount of charge is stored in the first capacitor 14 can be determined. Therefore, the first live wire terminal 12 can be connected to the positive pole of the external power supply, and the neutral wire terminal 15 can be connected to the negative pole of the external power supply. In this way, the external power supply can be connected to the motor 20 in series via the second live wire terminal 13 and the neutral wire terminal 15, forming a power supply loop for the motor 20. In the power supply loop, the first capacitor 14 is connected in parallel with the motor 20. The external power supply supplies power to the motor 20. When there is voltage interference in the power supply loop, the first capacitor 14 may absorb energy in the voltage interference, reducing the voltage interference. When starting the motor 20, even if the charging current for the first capacitor 14 is still generated in the power supply loop, a magnitude of the charging current may be reduced since the corresponding amount of charge is already stored in the first capacitor 14, and thus the first capacitor 14 may still not be damaged. Moreover, the first resistor 11 is not connected in the power supply loop. Therefore, the first resistor 11 cannot affect the filtering effect of the first capacitor 14. The external power supply may be provided by the mains supply.

In addition, in some embodiments, the motor 20 may include a motor circuit, a stator, and a rotor. Specifically, the motor circuit of the motor 20 may be electrically connected to the stator and the rotor. When the motor 20 is controlled to start, the motor circuit of the motor 20 may be energized through the power supply loop, driving the rotor to rotate relative to the stator.

In some embodiments, the predetermined charging condition includes: a duration of charging the first capacitor 14 reaches a first predetermined duration.

In this way, controllability can be improved.

It should be understood that an amount of charge in the first capacitor 14 may gradually increase over time during charging, and a pattern of an increase in the amount of charge may also be determined. Therefore, a storage degree of the charge in the first capacitor 14 can be determined based on the duration of charging the first capacitor 14. After the first capacitor 14 stores a certain degree of charge, the first capacitor 14 may have the condition to be connected to a power supply circuit of the motor 20, and a charging current generated after connection is also small enough. On the basis of the above, when the duration of charging the first capacitor 14 reaches the first predetermined duration, that the first capacitor 14 can be connected to the power supply loop can be determined. Therefore, the filter circuit 10 can be adjusted to supply power to the motor 20 via the second live wire terminal 13 and the neutral wire terminal 15. Therefore, determining a control timing for adjusting the filter circuit 10 can be facilitated, which is conducive to improving the controllability.

In addition, the first predetermined duration may be determined as desired, and may also be calibrated through actual tests. In some embodiments, the first predetermined duration may be determined by a capacitance value of the first capacitor 14, a resistance value of the first resistor 11, and an allowable amount of charge of the first capacitor 14. The allowable amount of charge of the first capacitor 14 may be a minimum amount of charge stored when the first capacitor 14 can be connected to the power supply loop. In one embodiment, the first predetermined duration may be 1 second.

As illustrated in FIG. 1, in some embodiments, the filter circuit 10 is connected to an end of a predetermined power supply 30 via the first live wire terminal 12 and the second live wire terminal 13, and is connected to the other end of the predetermined power supply 30 via the neutral wire terminal 15.

In this way, the circuit safety can be improved.

Specifically, on the basis of the foregoing embodiments, the external power supply may be the predetermined power supply 30. It should be understood that the filter circuit 10 may be connected to an end of the predetermined power supply 30 via the first live wire terminal 12 to enable the predetermined power supply 30 to charge the first capacitor 14, and may be connected to the end of the predetermined power supply 30 via the second live wire terminal 13 to enable the predetermined power supply 30 to supply power to the motor 20. Even if the first live wire terminal 12 and the second live wire terminal 13 are connected to the end of the predetermined power supply 30 simultaneously, there may be no voltage difference between the first live wire terminal 12 and the second live wire terminal 13, avoiding reverse charging between an external power supply connected to the first live wire terminal 12 and an external power supply connected to the second live wire terminal 13. Ultimately, improving the circuit safety can be facilitated.

As illustrated in FIG. 2, in some embodiments, the filter circuit 10 includes a first switch 16 connected to the first live wire terminal 12 and configured to turn on or off a path between the first live wire terminal 12 and a first predetermined power supply 31; and a second switch 17 connected to the second live wire terminal 13 and configured to turn on or off a path between the second live wire terminal 13 and a second predetermined power supply 32.

The filter circuit 10 is configured to: form the charging loop by turning on the first switch 16; and form, in response to the first capacitor 14 meeting the predetermined charging condition, the power supply loop by turning on the second switch 17.

In this way, a starting speed of the motor 20 can be ensured.

Specifically, in the embodiment shown in FIG. 2, the first switch 16 is connected to a positive pole of the first predetermined power supply 31. The second switch 17 is connected to a positive pole of the second predetermined power supply 32. The neutral wire terminal 15 is connected to a negative pole of the first predetermined power supply 31 and a negative pole of the second predetermined power supply 32. When the motor 20 needs to be started, the first switch 16 may be controlled to turn on to connect the first live wire terminal 12 and the positive pole of the first predetermined power supply 31, charging the first capacitor 14 via the first predetermined power supply 31. In response to determining that the first capacitor 14 meets the predetermined charging condition, the second switch 17 may be controlled to turn on to connect the second live wire terminal 13 and the positive pole of the second predetermined power supply 32, and the motor 20 may be controlled to start, to supply power to the motor 20 via the second predetermined power supply 32.

On the basis of the above embodiments, the charging loop and the power supply loop are formed by turning on the first switch 16 and the second switch 17, respectively, and the first switch 16 and the second switch 17 are located in different loops and independent of each other. Therefore, it is easy to control turning on/off of the first switch 16 and the second switch 17, to facilitate rapid switching between the charging loop and the power supply loop. In this way, a delayed start time of the motor 20 may not be increased due to a need to charge the first capacitor 14, which helps to ensure the starting speed of the motor 20.

In addition, as illustrated in FIG. 1, in the embodiment shown in FIG. 1, both the first predetermined power supply 31 and the second predetermined power supply 32 are the predetermined power supply 30.

As illustrated in FIG. 1 and FIG. 2, in some embodiments, in response to the first capacitor 14 meeting the predetermined charging condition, the first switch 16 is configured to be turned off within a second predetermined duration after the second switch 17 is turned on.

In this way, the impact of the first resistor 11 on the filtering effect of the first capacitor 14 can be reduced.

Specifically, it should be understood that within a period of time after the second switch 17 is turned on, the filter circuit 10 is in a state where the motor 20 is supplied with power via the first predetermined power supply 31 and the second predetermined power supply 32. In this case, the first resistor 11 is connected in the circuit, which is likely to affect the filtering effect of the first capacitor 14. In this case, by turning off the first switch 16 within the second predetermined duration after the second switch 17 is turned on, the charging current of the first capacitor 14 may still not be too large in a short time, and connection between the first resistor 11 and the first capacitor 14 can be disconnected in time, minimizing the impact of the first resistor 11 on the filtering effect of the first capacitor 14.

As illustrated in FIG. 1 and FIG. 2, an embodiment of the invention provides a household appliance 40. The household appliance 40 includes a motor 20 and the filter circuit 10 according to any one of the above embodiments.

For the above-mentioned household appliance 40, before starting the motor 20, by forming the charging loop to charge the first capacitor 14, the first resistor 11 connected in series to the first capacitor 14 can reduce the magnitude of the current for charging the first capacitor 14. After the certain amount of charge is already stored in the first capacitor 14, the power supply loop is formed to supply power to the motor 20. In this case, the current for charging the first capacitor 14 is small, which may not damage the first capacitor 14. Moreover, the first resistor 11 is not connected to the power supply loop, and thus the filtering effect of the first capacitor 14 may not be affected.

Specifically, as illustrated in FIG. 1 and FIG. 2, when the household appliance 40 needs to control the motor 20 to start, the first capacitor 14 may be energized via the first live wire terminal 12 and the neutral wire terminal 15 to pre-charge the first capacitor 14. Then, when the first capacitor 14 meets the predetermined charging condition, the motor 20 may be connected via the second live wire terminal 13 and the neutral wire terminal 15. In this case, the motor 20 is controlled to start. The first capacitor 14 is connected in parallel with the motor 20 to filter out the voltage interference to the motor 20 without generating a large charging current to the first capacitor 14.

In some embodiments, the household appliance 40 may include a dishwasher, a refrigerator, a microwave oven, an oven, a washing machine, and an air conditioner.

As illustrated in FIG. 1 to FIG. 3, an embodiment of the invention provides a control method for the household appliance 40. The household appliance 40 includes a filter circuit 10 and a motor 20. The filter circuit 10 includes: a first resistor 11 having an end connected to a first live wire terminal 12, and the other end connected to a second live wire terminal 13; and a first capacitor 14 connected in series to the first resistor 11. The first capacitor 14 has an end connected to the second live wire terminal 13 and the other end connected to a neutral wire terminal 15. Two ends of the first capacitor 14 each form an output terminal 18 configured to be connected to the motor 20. The control method includes operations at blocks.

At block 01, the first live wire terminal 12 and the neutral wire terminal 15 are connected to charge the first capacitor 14.

At block 03, in response to determining that the first capacitor 14 meets a predetermined charging condition, the second live wire terminal 13 and the neutral wire terminal 13 are connected to supply power to the motor 20 via the output terminal 18.

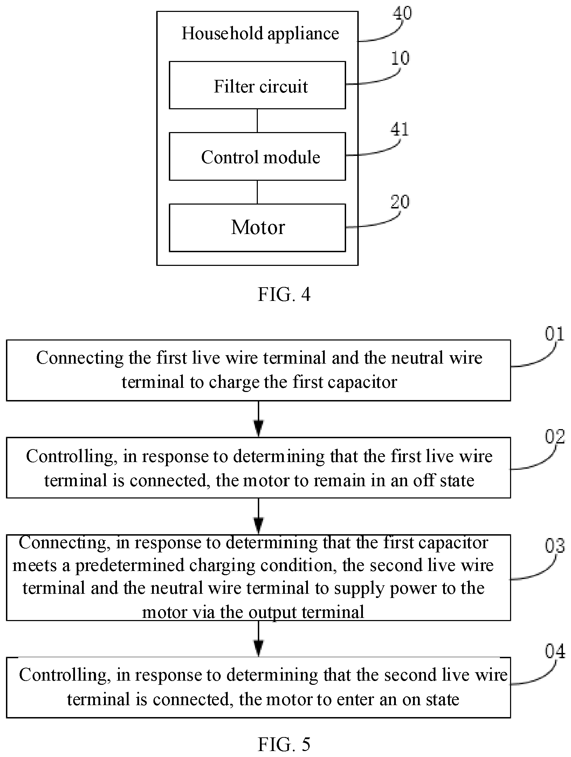

The control method according to the embodiment of the invention may be implemented by the household appliance 40 according to the embodiment of the invention. Specifically, as illustrated in FIG. 4, the household appliance 40 includes a control module 41. The control module 41 is configured to: connect the first live wire terminal 12 and the neutral wire terminal 15 to charge the first capacitor 14; and in response to determining that the first capacitor 14 meets the predetermined charging condition, connect the second live wire terminal 13 and the neutral wire terminal 15 to supply power to the motor 20 via the output terminal 18.

In the control method, before starting the motor 20, by forming the charging loop to charge the first capacitor 14, the first resistor 11 connected in series to the first capacitor 14 can reduce the magnitude of the current for charging the first capacitor 14. After the certain amount of charge is already stored in the first capacitor 14, the power supply loop is formed to supply power to the motor 20. In this case, the current for charging the first capacitor 14 is small, which may not damage the first capacitor 14. Moreover, the first resistor 11 is not connected to the power supply loop, and thus the filtering effect of the first capacitor 14 may not be affected.

Specifically, as illustrated in FIG. 1, FIG. 2, and FIG. 4, in the illustrated embodiments, the filter circuit 10 includes the first switch 16 and the second switch 17. The first switch 16 is connected to the first live wire terminal 12 and configured to turn on or off a path between the first live wire terminal 12 and the external power supply. The second switch 17 is connected to the second live wire terminal 13 and configured to turn on or off a path between the second live wire terminal 13 and the external power supply. The control module 41 is configured to control the first switch 16 to turn on, enabling the external power supply to connect the first live wire terminal 12 and the neutral wire terminal 15 to charge the first capacitor 14. Also, the control module 41 is configured to control the first switch 16 to turn off, enabling the external power supply to be disconnected from the first live wire terminal 12. The control module 41 is configured to control the second switch 17 to turn on, enabling the external power supply to connect the second live wire terminal 13 and the neutral wire terminal 15 to supply power to the motor 20. In addition, the control module 41 is also configured to control the second switch 17 to turn off, enabling the external power supply to be disconnected from the second live wire terminal 13.

In some embodiments, the first switch 16 and/or the second switch 17 may include a relay, a Bipolar Junction Transistor (BJT), a Field-Effect Transistor (FET), and a Metal Oxide Semi-conductor Field Effect Transistor (MOSFET).

As illustrated in FIG. 5, in some embodiments, the control method includes operations at blocks.

At block 02, in response to determining that the first live wire terminal 12 is connected, the motor 20 is controlled to remain in an off state.

At block 04, in response to determining that the second live wire terminal 13 is connected, the motor 20 is controlled to enter an on state.

The control method according to the embodiment of the invention may be implemented by the household appliance 40 according to the embodiment of the invention. Specifically, as illustrated in FIG. 4, the control module 41 is configured to: control, in response to determining that the first live wire terminal 12 is connected, the motor 20 to remain in an off state; and control, in response to determining that the second live wire terminal 13 is connected, the motor 20 to enter an on state.

In this way, determination of a starting timing of the motor 20 can be facilitated.

It should be understood that when the first live wire terminal 12 is connected, the first capacitor 14 is connected for charging. In this case, controlling the motor 20 to remain in the off state can avoid directly forming a loop for supplying power to the motor 20. When the second live wire terminal 13 is connected, the first capacitor 14 substantially completes charging. In this case, controlling the motor 20 to enter the on state enables the first capacitor 14 to filter out the voltage interference existing in the power supply loop, providing a good power supply environment for operation of the motor 20.

In some embodiments, the control method includes: in response to the first capacitor 14 meeting the predetermined charging condition, disconnecting connection with the first live wire terminal 12 within a second predetermined duration after the second live wire terminal 13 is connected.

The control method according to the embodiment of the invention may be implemented by the household appliance 40 according to the embodiment of the invention. Specifically, as illustrated in FIG. 4, the control module 41 is configured to: in response to the first capacitor 14 meeting the predetermined charging condition, disconnect connection with the first live wire terminal 12 within a second predetermined duration after the second live wire terminal 13 is connected.

In this way, the impact of the first resistor 11 on the filtering effect of the first capacitor 14 can be reduced.

Specifically, as illustrated in FIG. 1 and FIG. 2, on the basis of the foregoing embodiments, it can be known that the control module 41 may be connected to the second live wire terminal 13 by turning on the second switch 17, and may be disconnected to the first live wire terminal 12 by turning off the first switch 16. Reference about a specific implementation principle can be made to the foregoing embodiments, and thus details thereof will be omitted here.

The household appliance 40 according to the embodiment of the invention includes a memory and a processor. The memory has a computer program stored therein. The processor is configured to, when executing the computer program, implement the steps of the control method according to any one of the foregoing embodiments.

For example, when the computer program is executed by the processor, the implementable control method includes operations at blocks.

At block 01, the first live wire terminal 12 and the neutral wire terminal 15 are connected to charge the first capacitor 14.

At block 03, in response to determining that the first capacitor 14 meets a predetermined charging condition, the second live wire terminal 13 and the neutral wire terminal 15 are connected to supply power to the motor 20 via the output terminal 18.

For the above-mentioned household appliance 40, before starting the motor 20, by forming the charging loop to charge the first capacitor 14, the first resistor 11 connected in series to the first capacitor 14 can reduce the magnitude of the current for charging the first capacitor 14. After the certain amount of charge is already stored in the first capacitor 14, the power supply loop is formed to supply power to the motor 20. In this case, the current for charging the first capacitor 14 is small, which may not damage the first capacitor 14. Moreover, the first resistor 11 is not connected to the power supply loop, and thus the filtering effect of the first capacitor 14 may not be affected.

Specifically, as illustrated in FIG. 1 and FIG. 2, when the household appliance 40 needs to control the motor 20 to start, the first capacitor 14 may be energized via the first live wire terminal 12 and the neutral wire terminal 15 to pre-charge the first capacitor 14. Then, when the first capacitor 14 meets the predetermined charging condition, the motor 20 may be connected via the second live wire terminal 13 and the neutral wire terminal 15. In this case, the motor 20 is controlled to start. The first capacitor 14 is connected in parallel with the motor 20 to filter out the voltage interference to the motor 20 without generating the large charging current to the first capacitor 14.

In some embodiments, the household appliance 40 may include the dishwasher, the refrigerator, the microwave oven, the oven, the washing machine, and the air conditioner.

An embodiment of the invention provides a computer-readable storage medium. The computer-readable storage medium has a computer program stored thereon. The computer program is configured to, when executed by a processor, implement the steps of the control method according to any one of the above embodiments.

For example, when the computer program is executed by the processor, the implementable control method includes operations at blocks.

At block 01, the first live wire terminal 12 and the neutral wire terminal 15 are connected to charge the first capacitor 14.

At block 03, in response to determining that the first capacitor 14 meets a predetermined charging condition, the second live wire terminal 13 and the neutral wire terminal 15 are connected to supply power to the motor 20 via the output terminal 18.

For the above-mentioned computer-readable storage medium, before starting the motor 20, by forming the charging loop to charge the first capacitor 14, the first resistor 11 connected in series to the first capacitor 14 can reduce the magnitude of the current for charging the first capacitor 14. After the certain amount of charge is already stored in the first capacitor 14, the power supply loop is formed to supply power to the motor 20. In this case, the current for charging the first capacitor 14 is small, which may not damage the first capacitor 14. Moreover, the first resistor 11 is not connected to the power supply loop, and thus the filtering effect of the first capacitor 14 may not be affected.

The computer-readable storage medium may be disposed at the household appliance 40 or at other terminals. The household appliance 40 may be in communication with other terminals to obtain a corresponding program.

It should be understood that the computer-readable storage medium may include: any entity or device capable of carrying the computer program, a recording medium, a USB flash drive, a mobile hard disk, a magnetic disk, an optical disk, a computer memory, an Read-Only Memory (ROM), an Random Access Memory (RAM), and a software distribution medium, etc. The computer program includes computer program code. The computer program code may be in the form of source code, object code, executable files, or some intermediate forms, etc. The computer-readable storage medium may include: any entity or device capable of carrying computer program code, the recording medium, the USB flash drive, the mobile hard disk, the magnetic disk, the optical disk, the computer memory, the Read-Only Memory (ROM), the Random Access Memory (RAM), and the software distribution medium.

In some embodiments of the invention, the control module 41 may be a single-chip microcomputer chip integrating the processor, the memory, a communication module, or the like. The processor may be a Central Processing Unit (CPU), and may also be other general-purpose processors, a Digital Signal Processor (DSP), an Application Specific Integrated Circuit (ASIC), a Field-Programmable Gate Array (FPGA), or other programmable logic devices, a discrete gate or a transistor logic device, a discrete hardware component, etc.

Reference throughout this specification to "an embodiment", "some embodiments", "an illustrative embodiment", "an example", "a specific example", or "some examples" means that a particular feature, structure, material, or characteristic described in connection with the embodiment or example is included in at least one embodiment or example of the invention. The appearances of the above phrases in various places throughout this specification are not necessarily referring to the same embodiment or example. In addition, the particular features, structures, materials, or characteristics described may be combined in any suitable manner in any one or more embodiments or examples.

Although embodiments of the invention have been illustrated and described, it is conceivable for those skilled in the art that various changes, modifications, replacements, and variations can be made to these embodiments without departing from the principles and spirit of the invention. The scope of the invention shall be defined by the claims as appended and their equivalents.

## Claims

1. A filter circuit for a motor, wherein the filter circuit comprises:
a first resistor having an end connected to a first live wire terminal and the other end connected to a second live wire terminal; and
a first capacitor connected in series to the first resistor, the first capacitor having an end connected to the second live wire terminal and the other end connected to a neutral wire terminal, wherein two ends of the first capacitor each form an output terminal configured to be connected to the motor,
wherein the filter circuit is configured to:
form a charging loop comprising the first live wire terminal, the first resistor, the first capacitor, and the neutral wire terminal to charge the first capacitor; and
form, in the case that the first capacitor meets a predetermined charging condition, a power supply loop comprising the second live wire terminal, the motor, and the neutral wire terminal to supply power to the motor through the output terminal.

2. The filter circuit according to claim 1, wherein the predetermined charging condition comprises:
a duration of charging the first capacitor reaches a first predetermined duration.

3. The filter circuit according to claim 1 or 2, wherein the filter circuit is connected to an end of a predetermined power supply through the first live wire terminal and the second live wire terminal, and is connected to the other end of the predetermined power supply through the neutral wire terminal.

4. The filter circuit according to any one of claims 1 to 3, further comprising:
a first switch connected to the first live wire terminal and configured to turn on or off a path between the first live wire terminal and a first predetermined power supply; and
a second switch connected to the second live wire terminal and configured to turn on or off a path between the second live wire terminal and a second predetermined power supply,
wherein the filter circuit is configured to:
form the charging loop by turning on the first switch; and
form, in the case that the first capacitor meets the predetermined charging condition, the power supply loop by turning on the second switch.

5. The filter circuit according to claim 4, wherein in the case that the first capacitor meets the predetermined charging condition, the first switch is configured to be turned off within a second predetermined duration after the second switch is turned on.

6. A household appliance, comprising:
a motor; and
the filter circuit according to any one of claims 1 to 5.

7. A control method for a household appliance, wherein:
the household appliance comprises a filter circuit and a motor, the filter circuit comprising:
a first resistor having an end connected to a first live wire terminal, and the other end connected to a second live wire terminal; and
a first capacitor connected in series to the first resistor, the first capacitor having an end connected to the second live wire terminal and the other end connected to a neutral wire terminal, wherein two ends of the first capacitor each form an output terminal configured to be connected to the motor; and
the control method comprises:
connecting the first live wire terminal and the neutral wire terminal to charge the first capacitor; and
connecting, in the case of determining that the first capacitor meets a predetermined charging condition, the second live wire terminal and the neutral wire terminal to supply power to the motor through the output terminal.

8. The control method according to claim 7, further comprising:
controlling, in the case of determining that the first live wire terminal is connected, the motor to remain in an off state; and
controlling, in the case of determining that the second live wire terminal is connected, the motor to enter an on state.

9. The control method according to claim 7 or 8, further comprising:
in the case that the first capacitor meets the predetermined charging condition, disconnecting connection with the first live wire terminal within a second predetermined duration after the second live wire terminal is connected.

10. A household appliance, comprising:
a memory having a computer program stored therein; and
a processor, wherein the processor, when executing the computer program, implements steps of the control method according to any one of claims 7 to 9.

11. A computer-readable storage medium, having a computer program stored thereon, wherein the computer program, when executed by a processor, implements steps of the control method according to any one of claims 7 to 9.
